# EUROPEAN PATENT SPECIFICATION

(11) **EP 2 755 006 B1**
(45) Date of publication and mention of the grant of the patent: **12.04.2017**
(21) Application number: 12830500.0
(22) Date of filing: 07.09.2012
(51) Int. Cl.: G01M 3/38

(54) **CONTAINER LIQUID LEAK INSPECTION DEVICE**
VORRICHTUNG ZUR INSPEKTION VON FLÜSSIGKEITSBEHÄLTERN AUF UNDICHTIGKEIT
DISPOSITIF D'INSPECTION DE FUITE DE LIQUIDE DE RÉCIPIENT

(30) Priority: 08.09.2011 JP 2011196479
(43) Date of publication of application: 16.07.2014
(73) Proprietor: Suntory Holdings Limited, Osaka-shi, Osaka 530-8203 (JP)
(72) Inventor: KOBAYASHI Toshiya, Minato-ku, Tokyo 135-8631 (JP); IIZUKA Toshiaki, Minato-ku, Tokyo 135-8631 (JP); TAMURA Kosuke, Minato-ku, Tokyo 135-8631 (JP); SAKURAI Takuya, Minato-ku, Tokyo 135-8631 (JP)
(74) Representative: Vossius & Partner Patentanwälte Rechtsanwälte mbB
(86) International application number: PCT/JP2012/072910
(87) International publication number: WO 2013/035846

(56) References cited:
- FR-A1- 2 803 035
- JP-A- S 636 432
- JP-A- S 636 432
- JP-A- H07 333 171
- JP-A- H07 333 171
- JP-A- 2000 310 577
- JP-A- 2002 286 581
- JP-A- 2007 071 568
- JP-A- 2007 071 568
- US-A1- 2009 139 911

## Description

### Technical Field

The present invention relates to a liquid-leak inspection apparatus including a conveyer device for conveying a sealed container filled with liquid and having flexibility, a pressurization device for pressurizing the sealed container from its outside during conveyance thereof by the conveyer device, and a determination device for determining presence/absence of liquid leak from the sealed container.

### Background Art

With a sealed container filled with an amount of liquid, if a pinhole (a very small hole) is present in the container, leak of the filled liquid occurs via this pinhole.

The container liquid-leak inspection device described above is a device for determining presence/absence of liquid leak, because liquid filled in a sealed container leaks via a pinhole if such pinhole is present in the sealed container.

With a conventional liquid-leak inspection apparatus for a container, there are provided a pair of electrodes that are brought into contact with a sealed container, in order to determine presence/absence of liquid leak which may have occurred due to pressurization of the sealed container. More particularly, when the electrodes are short-circuited via an amount of liquid adhered to the sealed container due to liquid leak, the apparatus determines that liquid leak is present (see Patent Document 1 for example).

### Prior Art Document

### Patent Document

Patent Document 1: Japanese Unexamined Patent Application Publication No. 2000-9578
JP 2007 071568 A discusses a seal failure inspection device capable of inspecting instantly and surely whether a top part joint of a gable top product or a sealed portion of a bottom part has a failure or not. This seal failure inspection device has a vertical conveyor for sandwiching the gable top product from both sides, and conveying it, while applying a constant pressure in the lateral direction; a camera for imaging a top part and an infrared camera for imaging the bottom part; and an image analysis means for analyzing images imaged by the cameras, and detecting a seal failure of the gable top product.

JP S63 6432 A shows a device to detect an oil pool effectively and to remove danger from a supervisor and reduce the load on inspection and monitoring by irradiating an area to be monitored with an ultraviolet ray and making fluorescent materials in the oil to react, and photographing a light emission image due to the reaction.

JP H07 333171 A relates to a leak detection method and device having the capability of automatically discriminating the type of error associated with fluid leakage, regarding a device for monitoring an error in the operation of equipment in a plant.

US 2009/139911 A1 describes methods of manufacturing and testing cups and containers and in particular those that are made from expanded thermoplastic materials. Containers used for liquid or solid foodstuff are required to be substantially leak-proof so that the filled containers may be handled reliably during shipping and/or consumer usage. In this regard, containers made from expandable thermoplastic particles have a base molded to a generally cylindrical side wall and are suceptible to leakage when proper fusion of expandable particles is not achieved.

FR 2 803 035 A1 refers to a method for testing sealing in which a conveyor belt is synchronized with pressure application bands and containers are evenly spread out prior to entry into the pressure application bands. While the containers pass through the bands they are tested for an upper air pocket, for any escaping liquid and liquid level. The separation of the pressure bands is controlled and two downstream devices remove rejects. Also included is a machine for detecting and removing rejects from a production line for filling pliable containers with liquid.

### Summary of the Invention

### Problem to be Solved by Invention

With the conventional liquid-leak inspection apparatus for a container, if water or a like gets adhered to a sealed container prior to its pressurization, the apparatus is unable to determine whether this water or a like is due to liquid leak from the sealed container or not. So, accurate inspection is not possible.

For this reason, if there is possibility of water or a like getting adhered to a sealed container prior to its pressurization, there is a need to blow away this adhering water or a like with compressed air, thus inviting trouble in the inspection process.

Further, since the determination of presence/absence of liquid leak is made in association with short-circuit between the electrodes via liquid adhering to the sealed container, the inspection accuracy is apt to be affected by conductivity of a material forming the container and/or the filled liquid.

The present invention has been made in view of the above-described state of the art and its object is to provide a liquid-leak inspection apparatus for a container capable of inspecting presence/absence of liquid leak from a sealed container without being affected by conductivity of a material of the container or of filled liquid even when water or the like gets adhered to the sealed container prior to its pressurization.

### Means for Achieving the Object

The object of the invention is defined by the features of independent claim 1. Further preferred embodiments are defined by the dependent claims.

According to a first characterizing feature of a liquid-leak inspection apparatus for a container according to the present invention, the apparatus comprises a conveyer device for conveying a sealed container filled with liquid and having flexibility, a pressurization device for pressurizing the sealed container from its outside during conveyance thereof by the conveyer device, an image capture device for capturing image of the sealed container during pressurization thereof by the pressurization device together with its background, and a determination device for determining presence/absence of liquid leak from the sealed container, based on image information acquired by the image capture device, wherein the determination device is configured to check whether or not image information of discharged liquid discharged from the sealed container into the air is included in image information of the background and to determine presence of liquid leak from the sealed container if it is determined that the image information of discharged liquid is included in the image information of the background.

The liquid-leak inspection apparatus for a container arranged as above comprises an image capture device for capturing image of the sealed container during pressurization thereof by a pressurization device together with its background and a determination device for determining presence/absence of liquid leak from the sealed container, based on image information acquired by the image capture device, and the determination device is configured to check whether or not image information of discharged liquid discharged from the sealed container into the air is included in image information of the background and to determine presence of liquid leak from the sealed container if it is determined that the image information of discharged liquid is included in the image information of the background.

Namely, when a pinhole is present in the sealed container, the liquid will ooze out of the container during its pressurization onto the outer face thereof or be discharged into the air, via the pinhole.

Further, if a weak portion having an extremely small thickness is present in the sealed container, when this weak portion is broken as a result of pressurization of the sealed container, the liquid in the sealed container will ooze onto the outer face of the container or be discharged into the air via this broken portion.

Eventually, the liquid oozed onto the container outer face will be discharged as it falls down along the container outer face via e.g. the bottom of the container into the air.

The image capture device captures image of the sealed container during pressurization thereof by a pressurization device together with its background. So, when liquid leak occurs, it is possible to acquire image information of the background including image information of discharged liquid discharged into the air or falling down.

The determination device checks, based on the image information captured by the image capture device, whether or not image information of discharged liquid is included in the image information of the background and determines presence of liquid leak from the sealed container if it is determined that the image information of discharged liquid is included in the image information of the background.

Therefore, the liquid-leak inspection apparatus for a container arranged as above is capable of inspecting presence/absence of liquid leak from a sealed container based on presence/absence of image information of discharged liquid, without being affected by conductivity of a material of the container or of filled liquid even when water or the like gets adhered to the sealed container prior to its pressurization.

According to a second characterizing feature of the present invention, the determination device is configured to divide the image information of the background into information of multiple image areas adjacent each other and to check whether or not image information of the discharged liquid is included in at least two of the multiple image areas information and determines presence of liquid leak from the sealed container if it is determined that the image information of discharged liquid is included therein.

When water or the like adhering to a sealed liquid falls down in the form of separate droplets, such droplets can easily be misidentified as discharged liquid discharged from the sealed container.

With the above-described arrangement, if liquid falls down in the form of separate droplets, even when image information of such droplets is obtained, this is not determined as image information included in at least two of the multiple image areas information, so that the determination device will not erroneously determine this as presence of liquid leak.

And, it is determined that liquid leak from the sealed container is present when image information of the discharged liquid is included in at least two of the multiple image areas information. Therefore, presence/absence of liquid leak from the sealed container can be inspected with high accuracy.

According to a third characterizing feature of the present invention, the inventive apparatus further comprises a removal device capable of removing the sealed container on which presence of liquid leak has been determined from a conveyance path of the conveyer device and a control device for controlling operation of the removal device so as to remove the sealed container on which presence of liquid leak has been determined from from conveyance path.

With the above-described arrangement, it is possible to remove efficiently a sealed container on which presence of liquid leak has been determined from from conveyance path.

According to a fourth characterizing feature of the present invention, the pressurization device comprises a conveyer belt included in the conveyer device, the conveyer belt being capable of gripping-conveyance in which the sealed container is gripped for its conveyance while being pressurized.

With the above-described arrangement, it is possible for the conveyer belt to convey a large number of sealed containers with pressurization thereof, without giving any damage thereto and to capture images of these sealed containers being pressurized together with the background image thereof. Therefore, presence/absence of liquid leak from the sealed containers can be inspected in an efficient manner.

### Brief Description of the Drawings

[Fig. 1] is a schematic plane view showing a liquid-leak inspection apparatus for a container,
[Fig. 2] is a schematic side view showing the liquid-leak inspection apparatus for a container,
[Fig. 3] is a schematic front view showing the liquid-leak inspection apparatus for a container,
[Fig. 4] is a diagram for explaining a determination operation, and
[Fig. 5] is a diagram for explaining a determination operation according to a second embodiment.

### Modes of Embodying the Invention

Next, embodiments of the present invention will be explained with reference to the accompanying drawings.

### [First Embodiment]

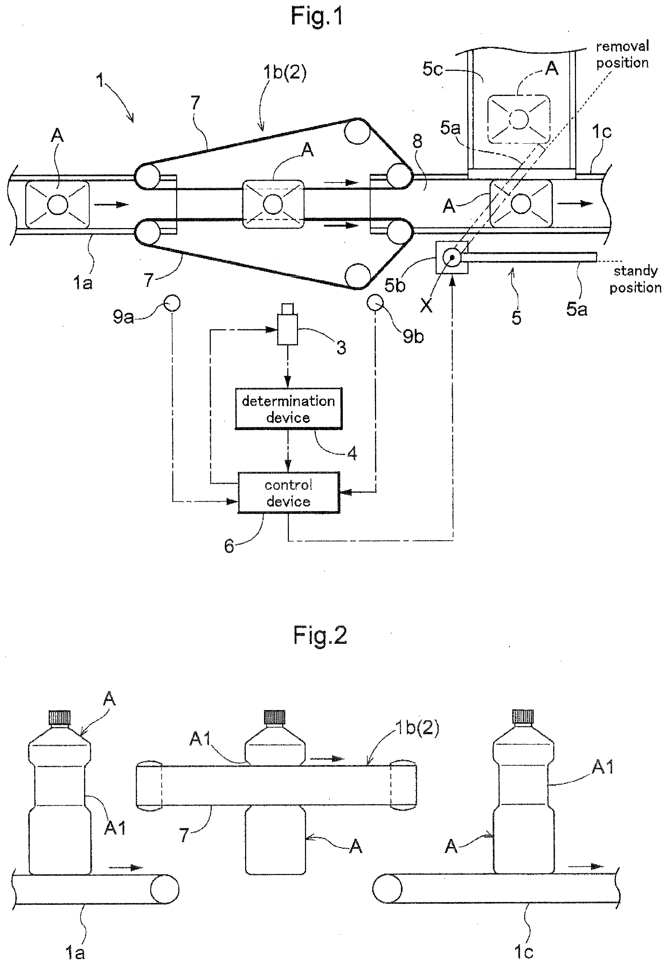

Figs. 1-3 show a liquid-leak inspection apparatus for a container according to the present invention.

The liquid-leak inspection apparatus includes a conveyer device 1 for conveying a certain plurality of sealed containers A each sealed with an amount of liquid charged therein, with mounting the containers A in a row along a conveyance direction, a pressurization device 2 for pressurizing the sealed container A being conveyed by the conveyer device 1, from the outside of the container A, an image capture device 3 constituted of a high-speed camera or the like for capturing image of the sealed container A during pressurization thereof by the pressurization device 2 together with its background, a determination device 4 for determining presence/absence of liquid leak from the sealed container A, based on image information acquired by the image capture device 3, and a control device 6 for controlling an image capture operation of the image capture device 3 and an operation of a removal device 5 which will be described later.

The sealed container A is manufactured by blow-molding of e.g. PET resin for instance and has flexibility of being elastically deformed in response to pressurization thereof from its outside when the container is sealed with an amount of liquid charged therein.

The pressurization device 2 comprises a pair of conveyer belts 7 provided midway of the conveyer device 1, the convey belts 7 being capable of conveying the sealed container A set under an upright posture with gripping the container A and with simultaneous pressurization thereof. More particularly, to the conveyer belts 7, there is applied a predetermined tension so that these belts 7 can grip or sandwich therebetween a constricted portion A1 formed in the body portion, e.g. a vertically intermediate portion, of the sealed container A assuming the upright posture and can convey this container A under a suspended posture while applying the pressurization thereto.

Therefore, the conveyer device 1 includes a pressurization-conveyance portion 1b at which the sealed container A under the upright posture is conveyed while being pressurized, and a first mounting-conveyance portion 1a and a second mounting-conveyance portion 1c which respectively are provided before and after the pressurization-conveyance portion 1b and configured for mounting and conveying the sealed container A under the upright posture.

More particularly, a sealed container A mounted and having been conveyed at the first mounting-conveyance portion 1a is received by the pressurization-conveyance portion 1b with simultaneous application of pressure thereto. Then, the sealed container A after the pressure application by the pressurization-conveyance portion 1b is received and then mounted and conveyed by the second mounting-conveyance portion 1c.

The image capture device 3 captures image of the bottom of the sealed container A conveyed under the suspended posture while being pressurized by the pressurization-conveyance portion 1b.

There is provided the removal device 5 capable of removing from a conveyance path 8 the sealed container A which is being conveyed by the second mounting-conveyance portion 1c, after application of pressure thereto by the pressurization device 2.

The removal device 5 includes a removal bar 5a supported to be pivotable about a vertical axis X, and a driver device 5b for pivotally driving the removal bar 5a between a standby position where the removal bar 5a is set ready laterally of the conveyance path 8 and a removal position where the removal bar 5a traverses the conveyance path 8.

The removal bar 5a, when driven to be pivoted from the standby position toward the removal position, is capable of pushing out the sealed container A during its conveyance at the second mounting-conveyance portion 1c, toward a lateral side of the conveyance path 8, thus causing this container A to be dropped into a discharge chute 5c.

At the pressurization-conveyance portion 1b, there are disposed an entrance sensor 9a comprised of a photo sensor or the like and configured to detect the sealed container A transferred from the first mounting-conveyance portion 1a, at the conveyance starting end and an exit sensor 9b comprised of a photo sensor or the like and configured to detect the sealed container A to be transferred to the second mounting-conveyance portion 1c, at the conveyance finishing end.

The control device 6 stores therein in advance a period subsequent to detection of the sealed container A at the entrance sensor 9a until its passage in front of the image capture device 3. In operation, in response to input of a detection signal of the sealed container A by the entrance sensor 9a, the control device 6 activates the image capture device 3 at the time of passage of this sealed container A in front of the image capture device 3 to capture an image of this sealed container A together with its background.

Further, the control device 6 stores also in advance a predetermined detection period from determination of presence/absence of liquid leak from the sealed container A by the determination device 4 until its detection by the exit sensor 9b and a predetermined removal period from detection of the sealed container A by the exit sensor 9b until its passage through the removal position provided by the removal bar 5a.

Then, in response to input of a determination signal indicative of presence of liquid leak from the determination device 4, the control device 6 recognizes this sealed container A detected by the exit sensor 9b upon lapse of a predetermined detection period subsequently thereto and then activates the removal device 5 so that its removal bar 5a is pivotally driven from the standby position to the removal position in order to remove this recognized sealed container A from the conveyance path 8.

The determination device 4 is constituted of an information processing unit (a computer) storing a determination program therein. In response to each input of image information acquired by the image capture device 3, the determination device 4 executes the determination program based on this inputted image information, thereby to determine presence/absence of liquid leak from the sealed container A.

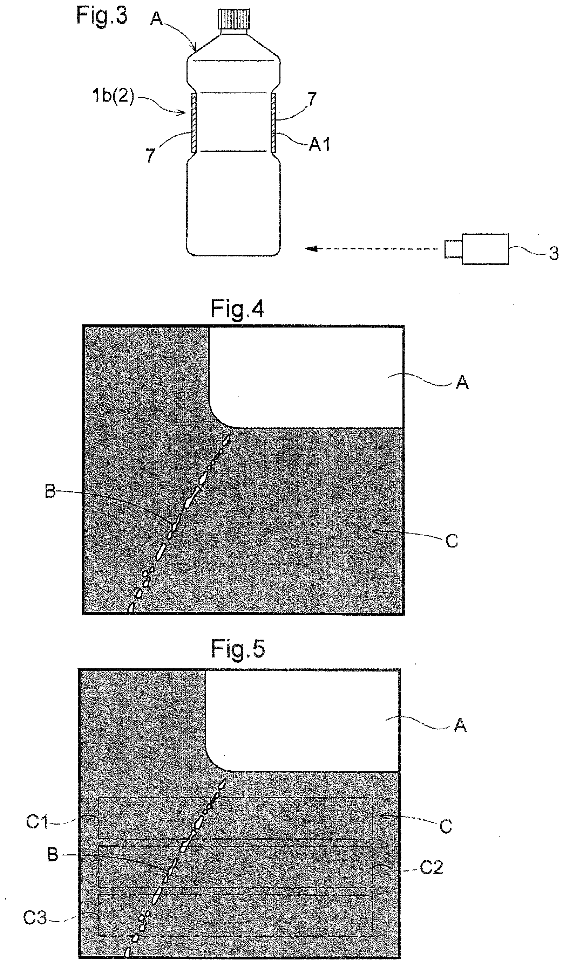

The determination program is configured to determine whether or not background image information C includes image information of discharged liquid discharged substantially linearly along an approximately constant path from the sealed container A into the air and determines that liquid leak from the sealed container A is present if it is determined that the image information B of such discharged liquid is included in the background image information C as shown in the diagram of Fig. 4.

Incidentally, discharged liquid discharged substantially linearly from the sealed container A is not limited to discharged liquid discharged continuously (in continuation) along a substantially constant path, but includes discharged liquid comprised of a series of multiple liquid droplets separated from each other and discharged along the substantially constant path.

### [Second Embodiment]

In the liquid leak inspection apparatus for a container according to the present invention, the determination program is configured to divide the background image information C into a plurality of (three in the instant embodiment) image areas information C1-C3 adjacent each other as shown in the diagram of Fig. 5 and checks whether the image information B of discharged liquid is included in each one of the multiple image areas information C1-C3 in substantially continuous manner or whether the image information B of discharged liquid is included in at least two of the multiple image areas information C1-C3.

Then, if it is determined that the image information B of discharged liquid is included in each one of the multiple image areas information C1-C3 in substantially continuous manner as shown in the diagram of Fig. 5 or that the image information B of discharged liquid is included in at least two of the multiple image areas information C1-C3 though not shown, it is determined that liquid leak is present.

Further, in case discharged liquid discharged approximately continuously from the sealed container A into the air comprises discharged liquid comprised of multiple liquid droplets being discharged separately from each other along an approximately constant path, if it is determined that the image information B of this discharged liquid is included in at least two of the multiple image areas information C1-C3, it is determined that liquid leak is present.

The rest of the arrangement is identical to that of the first embodiment.

### [Other Embodiments]

1. The liquid-leak inspection apparatus for a container according to the present invention may include a plurality of image capture devices 3 for capturing images of a sealed container A during pressure application thereto by the pressurization device 2 from mutually different angles, and a determination device 4 for determining presence/absence of liquid leak from the sealed container A based on image information acquired by each image capture device 3.
2. The liquid-leak inspection apparatus for a container according to the present invention may include an image capture device 3 configured to capture image of the entirety of a sealed container A conveyed under the upright posture with simultaneous application of pressure thereto at the pressurization-conveyance portion 1b, together with its background.
3. The liquid-leak inspection apparatus for a container according to the present invention may include a monitor or the like for displaying result of determination of presence/absence of liquid leak.

### Description of Reference Marks/Numerals

- 1: conveyance device
- 2: pressurization device
- 3: image capture device
- 4: determination device
- 5: removal device
- 6: control device
- 7: conveyer belt
- 8: conveyance path
- A: sealed container
- B: image information of discharged liquid
- C: image information of background
- C1-C3: image area information

## Claims

1. A liquid-leak inspection apparatus for a container comprising:
a conveyer device (1) for conveying a sealed container (A) manufactured by blow-molding of resin, filled with liquid and having flexibility;
a pressurization device (2) for pressurizing the sealed container from its outside during conveyance thereof by the conveyer device (1);
an image capture device (3) for capturing image of the sealed container (A) during pressurization thereof by the pressurization device (2) together with its background; and
a determination device (4) for determining presence/absence of liquid leak from the sealed container (A), based on image information acquired by the image capture device (3); **characterized in that**
the determination device (4) is configured to check whether or not image information of discharged liquid (B) discharged from the sealed container (A) into the air is included in image information of the background (C) and to determine presence of liquid leak from the sealed container (A) if it is determined that the image information of discharged liquid (B) is included in the image information of the background (C),
wherein the determination device (4) is configured to divide the image information of the background (C) into information of multiple image areas adjacent each other and to check whether or not image information of the discharged liquid (B) is included in at least two of the multiple image areas information and determines presence of liquid leak from the sealed container (A) if it is determined that the image information of discharged liquid (B) is included therein.

2. A liquid-leak inspection apparatus for a container according to claim 1, further comprising:
a removal device (5) capable of removing the sealed container (A) on which presence of liquid leak has been determined from a conveyance path (8) of the conveyer device (1); and
a control device (6) for controlling operation of the removal device (5) so as to remove the sealed container (A) on which presence of liquid leak has been determined from conveyance path (8).

3. A liquid-leak inspection apparatus for a container according to claim 1 or 2, wherein the pressurization device (2) comprises a conveyer belt included in the conveyer device, the conveyer belt (7) being capable of gripping-conveyance in which the sealed container (A) is gripped for its conveyance while being pressurized.

## Patentansprüche

1. Flüssigkeitsleckinspektionsvorrichtung für einen Behälter, die aufweist:
eine Fördervorrichtung (1) zum Befördern eines verschlossenen Behälters (A), der durch Blasformen von Harz hergestellt ist, mit Flüssigkeit gefüllt ist und Elastizität hat;
eine Druckbeaufschlagungsvorrichtung (2) zum Unter-Druck-Setzen des verschlossenen Behälters von außen während seiner Beförderung durch die Fördervorrichtung (1);
eine Bildaufnahmevorrichtung (3) zum Aufnehmen eines Bilds des verschlossenen Behälters (A), während dieser von der Druckbeaufschlagungsvorrichtung (2) unter Druck gesetzt wird, zusammen mit seinem Hintergrund; und
eine Bestimmungsvorrichtung (4) zum Bestimmen des Vorhandenseins/Nichtvorhandenseins eines Flüssigkeitslecks des verschlossenen Behälters (A) basierend auf Bildinformationen, die von der Bildaufnahmevorrichtung (3) erlangt werden; **dadurch gekennzeichnet, dass**
die Bestimmungsvorrichtung (4) konfiguriert ist, um zu prüfen, ob Bildinformationen von abgegebener Flüssigkeit (B), die von dem verschlossenen Behälter (A) in die Luft abgegeben wird, in Bildinformationen des Hintergrunds (C) enthalten sind, und um das Vorhandensein eines Flüssigkeitslecks des verschlossenen Behälters (A) zu bestimmen, wenn bestimmt wird, dass die Bildinformationen von abgegebener Flüssigkeit (B) in den Bildinformationen des Hintergrunds (C) enthalten sind,
wobei die Bestimmungsvorrichtung (4) konfiguriert ist, um die Bildinformationen des Hintergrunds (C) in Informationen mehrerer zueinander benachbarter Bildbereiche zu unterteilen und zu prüfen, ob Bildinformationen der abgegebenen Flüssigkeit (B) in wenigstens zwei der mehreren Bildbereichsinformationen enthalten sind oder nicht, und das Vorhandensein eines Flüssigkeitslecks des verschlossenen Behälters (A) bestimmt, wenn bestimmt wird, dass die Bildinformationen der abgegebenen Flüssigkeit (B) darin enthalten sind.

2. Flüssigkeitsleckinspektionsvorrichtung für einen Behälter nach Anspruch 1, die ferner aufweist:
eine Entfernungsvorrichtung (5), die fähig ist, den verschlossenen Behälter (A), bei dem das Vorhandensein eines Flüssigkeitslecks bestimmt wurde, von einem Förderweg (8) der Fördervorrichtung (1) zu entfernen; und
eine Steuervorrichtung (6) zum Steuern des Betriebs der Entfernungsvorrichtung (5), um den verschlossenen Behälter (A), bei dem das Vorhandensein eines Flüssigkeitslecks bestimmt wurde, von dem Förderweg (8) zu entfernen.

3. Flüssigkeitsleckinspektionsvorrichtung für einen Behälter nach Anspruch 1 oder 2, wobei die Druckbeaufschlagungsvorrichtung (2) ein Förderband aufweist, das in der Fördervorrichtung enthalten ist, wobei das Förderband (7) zu einer greifenden Beförderung fähig ist, bei welcher der verschlossene Behälter (A) für seine Beförderung gegriffen wird, während er unter Druck gesetzt wird.

## Revendications

1. Appareil d'inspection de fuite de liquide destiné à un conteneur comprenant :
un dispositif de transport (1) destiné à acheminer un conteneur fermé (A) fabriqué par moulage par soufflage d'une résine, rempli avec un liquide et présentant une flexibilité ;
un dispositif de pressurisation (2) destiné à pressuriser le conteneur fermé depuis son extérieur pendant son acheminement par le dispositif de transport (1) ;
un dispositif de capture d'image (3) destiné à capturer une image du conteneur fermé (A) pendant sa pressurisation par le dispositif de pressurisation (2) avec son fond ; et
un dispositif de détermination (4) destiné à déterminer la présence/l'absence d'une fuite de liquide du conteneur fermé (A), sur la base d'informations d'image acquises par le dispositif de capture d'image (3) ; **caractérisé en ce que**
le dispositif de détermination (4) est configuré pour vérifier si les informations d'image du liquide évacué (B) du conteneur fermé (A) dans l'air sont incluses ou non dans les informations d'image du fond (C), et pour déterminer la présence d'une fuite de liquide du conteneur fermé (A) s'il est déterminé que les informations d'image du liquide évacué (B) sont incluses dans les informations d'image du fond (C),
dans lequel le dispositif de détermination (4) est configuré pour diviser les informations d'image du fond (C) en informations de plusieurs zones d'image adjacentes les unes aux autres, et pour vérifier si les informations d'image du liquide évacué (B) sont incluses ou non dans au moins deux des informations de multiples zones d'image, et détermine la présence d'une fuite de liquide du conteneur fermé (A) s'il est déterminé que les informations d'image du liquide évacué (B) sont incluses à l'intérieur.

2. Appareil d'inspection de fuite de liquide destiné à un conteneur selon la revendication 1, comprenant en outre :
un dispositif de retrait (5) capable de retirer le conteneur fermé (A) sur lequel la présence d'une fuite de liquide a été déterminée d'un trajet d'acheminement (8) du dispositif de transport (1) ; et
un dispositif de commande (6) destiné à contrôler le fonctionnement du dispositif de retrait (5) de façon à retirer le conteneur fermé (A) sur lequel la présence d'une fuite de liquide a été déterminée du trajet d'acheminement (8).

3. Appareil d'inspection de fuite de liquide destiné à un conteneur selon la revendication 1 ou 2, dans lequel le dispositif de pressurisation (2) comprend une courroie d'acheminement incluse dans le dispositif de transport, la courroie d'acheminement (7) pouvant effectuer un acheminement par saisie lors duquel le conteneur fermé (A) est saisi afin d'être acheminé pendant qu'il est pressurisé.
